(19) Europäisches Patentamt
European Patent Office
Office européen des brevets

(11) **EP 4 230 055 A1**

(12) **EUROPEAN PATENT APPLICATION**

(43) Date of publication:
**23.08.2023 Bulletin 2023/34**

(21) Application number: **22157277.9**

(22) Date of filing: **17.02.2022**

(51) International Patent Classification (IPC):
**A23K 20/105** (2016.01)    **A23K 20/20** (2016.01)
**A23K 20/24** (2016.01)    **A23K 50/15** (2016.01)

(52) Cooperative Patent Classification (CPC):
**A23K 50/15; A23K 20/105; A23K 20/20;**
**A23K 20/24;** A23V 2200/32

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Yara International ASA**
**0277 Oslo (NO)**

(72) Inventors:
• **RUIZ, Isabel**
**28806 Alcalá de Henares (Madrid) (ES)**

• **MARTINEZ-LUENGAS, Inés**
**28223 Pozuelo de Alarcón (Madrid) (ES)**
• **PIRRO, Laura**
**NL-4541 HJ Terneuzen (NL)**
• **VAN BELZEN, Ruud**
**NL-4541 HJ Terneuzen (NL)**
• **IPHARRAGUERRE, Ignacio R.**
**08461 Barcelona (ES)**

(74) Representative: **De Clercq & Partners**
**Edgard Gevaertdreef 10a**
**9830 Sint-Martens-Latem (BE)**

(54) **RUMINANT FEED SUPPLEMENT COMPOSITION AND USE THEREOF AS A NON-PROTEIN NITROGEN SOURCE TO IMPROVE NITROGEN NUTRITION AND REDUCE METHANE EMISSIONS**

(57)    The present disclosure relates to a ruminant feed supplement composition comprising urea, biuret and one or more nitrate compounds. The present disclosure further relates to the use of such a ruminant feed supplement composition as a NPN-source to improve nitrogen nutrition and to reduce methane emissions.

EP 4 230 055 A1

## Description

### Technical field

The present disclosure relates to a ruminant feed supplement composition. The present disclosure further relates to the use of such a ruminant feed supplement composition as a dietary non-protein nitrogen (NPN) source to improve nitrogen nutrition and to reduce methane emissions by ruminant animals.

### Background art

Ruminants are defined as large hoofed herbivorous grazing or browsing mammals that are able to acquire nutrients from plant-based feed by digesting it in a specialized stomach having four compartments, one of which is the rumen. Thanks to the microbial actions in the rumen prior to digestion, ruminants have the unique ability to use (low quality) protein sources and also NPN sources. This gives them a competitive advantage over other domesticated animals. The symbiotic relationship with the rumen microflora allows ruminants to upcycle nutrients to produce highly nutritious animal proteins, by means of an efficient pre-gastric fermentation of feeds, which takes place in the reticulorumen, the largest compartment of their gastrointestinal tract. Ruminants provide an optimum environment for microorganisms to thrive, and they, in turn, supply the ruminant host with microbial crude protein, which is of high quality in terms of amino acids supplement. In beef and dairy production systems, the microbial crude protein synthesized in the rumen provides the majority of the metabolizable protein required by the animal.

Increased utilization of N for bacterial synthesis and capture of dietary N into anabolic products, particularly absorbed amino acids, may be influenced by dietary manipulation, mainly by energy levels in the ration. However, there is an upper limit to the overall efficiency of the process: a maximum of 50 to 60% of dietary N, or 70 to 90% of apparent digested N will be converted into amino acids and released into the portal vein. For this reason, particularly in beef cattle diets, it is extremely important to assess the optimum kinetics of N release in NPN sources for each energy source (e.g., basal forage diet, supplemental by-products, etc.) to maximize N utilization and minimize excretion.

In most beef production systems, several grains and grain byproducts are available as supplemental protein sources. However, on a per kg of N supplied, it is nearly impossible to compete with the lower costs of supplemental crude protein in the form of NPN. Therefore, any shortage of protein in a diet or supplementation program is frequently covered by the use of urea-based supplements in the form of range cubes, liquid or pelleted supplements and tubs. Apart from urea, other ammonia forming chemical compounds such as biuret and ammonium sulfate have been used in the formulation of ruminal diets to replace part of plant protein sources and providing adequate amounts of ruminal degradable protein for a better efficiency of fiber digestion and the synthesis of microbial protein.

However, some challenges related to the rapid release of N mainly by urea, limit its use as the most cost effective NPN source. In recent years, several slow-release urea products have been developed and tested in ruminant nutrition with variable results. Currently, there is growing interest in decreasing the environmental impact of ruminant production, including beef and dairy, and many strategies are being pursued to achieve this goal.

In the current ruminant feeding systems, methane ($CH_4$) production is an inevitable consequence of fermentative digestion. The microbial consortium of the rumen must dispose hydrogen that is produced during fermentation. Otherwise, hydrogen would accumulate in the rumen and thereby inhibit fermentation of ingested feeds. Therefore, the rumen microbial system is provided with methanogens that reduce carbon dioxide ($CO_2$) to methane.

The major hydrogen (electron) sink in the rumen is methane produced by the reduction of carbon dioxide using reduced co-enzymes such as NADH as the electron source. Methane is however an energy loss for ruminants and a potent greenhouse gas, which is a 28-times greater global warming potential than carbon dioxide.

Globally, ruminants produce some 80 million tons of methane annually, accounting for some 28% of manmade methane emissions. The adoption of ruminant management practices which result in major reductions of release of methane are consequently high priority.

It is already known that the supplementation of nitrate compounds may be a viable strategy to reduce methane emissions in ruminant production systems. However, the effects of nitrate compounds on high-forage diets have not been extensively studied, as well as potential combination of nitrate compounds with other NPN-sources. Most studies have been focusing on replacing urea almost completely with nitrates.

In WO 2017/181250, a controlled-release coated non-protein nitrogen food (feed) supplement for animal nutrition is described, particularly to be administered to ruminant animals, which is completely metabolized in the abomasum of the animal. This supplement comprises a core comprising 80 - 90 wt.% NPN-source and a multilayer coating surrounding the core which comprises at least four different layers. This patent application discloses a list of different components which could be used as an NPN-source in the core, preferably being urea (as the single component). However, no specific suitable combinations have been mentioned.

It is a goal of the present disclosure to provide a novel and improved NPN-source for ruminants useful for improving the retention of N by rumen microorganisms and, at the same time, contributing to decrease enteric methane production.

**Summary**

According to a first aspect of the present disclosure, a ruminant feed supplement composition is disclosed comprising urea, biuret and one or more nitrate compounds. Considering that supplemental protein contributes the largest proportion of the feeding costs in ruminant production, this supplement has the advantage to be a cost-effective source of N for controlling them. Additionally, the added nitrate compound(s) contribute to mitigate methane emissions by ruminants. This is because feeding nitrates as a dietary NPN source decreases enteric methane production by outcompeting methanogenesis in the rumen when nitrate ($NO_3$) is reduced to ammonia ($NH_3$).

In a specific embodiment of a ruminant feed supplement composition according to the present disclosure, the supplement comprises between 5 and 60 wt.% of urea, between 2 and 60 wt.% of biuret and between 20 and 40 wt.% of one or more nitrate compounds.

In a more specific embodiment of a ruminant feed supplement composition according to the present disclosure, the ruminant feed supplement composition comprises between 20 and 40 wt.% of urea, between 20 and 40 wt.% of biuret and between 21 and 37 wt.% of one or more nitrate compounds is disclosed.

In a still more specific embodiment of a ruminant feed supplement composition according to the present disclosure, the supplement comprises between 25 and 35 wt.% of urea, most specific between 29 and 33 wt.% of urea, between 25 and 35 wt.% of biuret, most specific between 29 and 33 wt.% of biuret, and between 23.5 and 31.5 wt.% of one or more nitrate compounds.

In a possible embodiment of a ruminant feed supplement composition according to the present disclosure, the nitrate compound is a water-soluble nitrate salt. More in particular the water-soluble nitrate salt is chosen out of calcium nitrate ($Ca(NO_3)_2$), magnesium nitrate ($Mg(NO_3)_2$), ammonium nitrate ($NH_4NO_3$), potassium nitrate ($KNO_3$) and/or sodium nitrate ($NaNO_3$). The nitrate present in these nitrate salts has a nutritional value for the ruminant as it is an NPN since they provide nitrogen for the microbial protein synthesis. The magnesium, calcium, potassium, sodium, etc. may have may have an additional nutritional value for the ruminants as these are macrominerals that can be utilized by the animal.

More in particular, the supplement comprises between 20 and 32 wt.% of calcium nitrate, still more in particular between 22 and 29 wt.% of calcium nitrate, and between 1 and 5 wt.% of ammonium nitrate, and still more in particular between 1.5 and 2.5 wt.% of ammonium nitrate.

In an optional embodiment of a ruminant feed supplement composition according to the present disclosure, the supplement comprises between 1 and 5 wt.% of triuret, more in particular between 1.5 and 3 wt.% of triuret.

In another optional embodiment of a ruminant feed supplement composition according to the present disclosure, the supplement comprises between 0.5 and 3.0 wt.% of ammelide, more in particular between 0.9 and 1.5 wt.% of ammelide.

In another optional embodiment of a ruminant feed according to the present disclosure, the supplement comprises between 3 and 30 wt.% of cyanuric acid, more in particular between 3 and 7 wt.% of cyanuric acid.

In a possible embodiment of a ruminant feed supplement composition according to the present disclosure, the supplement comprises between 0.1 and 4.5 wt.% of moisture, more in particular between 0.2 and 2.5 wt.% of moisture.

According to another aspect of the present disclosure, use of a ruminant feed supplement composition, comprising urea, biuret and a nitrate compound, as a NPN-source to improve nitrogen nutrition and to reduce methane emissions is disclosed.

In a possible use according to the present disclosure, a ruminant feed supplement composition as described above according to the present disclosure is used.

**Detailed description**

The present disclosure firstly relates to a ruminant feed supplement composition which comprises urea, biuret and one or more nitrate compounds. A ruminant feed supplement composition is meant to be included as a part of the ruminant diet. Not being bound by any theory, the combination of urea, biuret and one or more nitrate compounds provides an intrinsic slow release effect in the gastro-intestinal tract of the animal.

Optionally, one or more anti-caking agents as generally known in the art can be added to the ruminant feed supplement composition, either incorporated in the feed supplement, either as a coating, to improve handling properties and to improve the quality of the ruminant feed supplement composition.

Furthermore, it is also possible to add any pre-biotics, pro-biotics, post-biotics, anti-biotics, bio stimulants known in the art for fostering / supporting the nitrogen assimilation and rumen fermentation.

More in particular, the supplement comprises:

- between 5 and 60 wt.%, more in particular between 20 and 40 wt.% of urea, still more in particular between 25 and 35 wt.%, and most in particular between 29 and 33 wt.% of urea;
- between 2 and 60 wt.%, more in particular between 20 and 40 wt.% of biuret, still more in particular between 25 and 35 wt.%, and most in particular between 29 and 33 wt.% of biuret;
- between 20 and 40 wt.%, more in particular between 21 and 37 wt.% and most in particular between 23.5 and 31.5 wt.% of one or more nitrate compounds.

The one or more nitrate compounds are more in particular water-soluble nitrate salts. Examples thereof are calcium nitrate, magnesium nitrate, ammonium nitrate, potassium nitrate, sodium nitrate or a combination of two or more of these.

The ruminant feed supplement composition more in particular comprises between 20 and 32 wt.% of calcium nitrate and between 1 and 5 wt.% of ammonium nitrate, more in particular between 22 and 29 wt.% of calcium nitrate and between 1.5 and 2.5 wt.% of ammonium nitrate.

It is remarked that the amount of the one or more nitrate compounds and the type thereof must be such that these are not toxic to the ruminant.

The ruminant feed supplement composition according to the present disclosure further comprises low percentage of by-products such as cyanuric acid, triuret and ammelide, which are poorly hydrolysed in the rumen. Cyanuric acid and triuret are, just like biuret, non-toxic for the ruminants and give as good nitrogen retention figures as biuret does. Ammelide is an unavoidable by-product in the production of the necessary amount of biuret. The amount of ammelide however needs to be limited since it can be toxic in higher doses. More in particular, the supplement comprises

- between 1 and 5 wt.%, more in particular between 1.5 and 3 wt.% of triuret;
- between 0.5 and 3 wt.%, more in particular between 0.9 and 1.5 wt.% of ammelide; and
- between 3 and 7 wt.%, more in particular between 3 and 7 wt.% of cyanuric acid.

The ruminant feed supplement composition according to the present disclosure comprises more in particular between 0.1 and 4.5 wt.%, and more in particular between 0.2 and 2.5 wt.% of moisture ($H_2O$).

The present disclosure further relates to the use of a ruminant feed supplement composition comprising urea, biuret and one or more nitrate compounds as a dietary NPN-source for ruminants and at the same time to reduce methane production in ruminants.

More in particular, a ruminant feed as described above is used.

The disclosure as defined here above will now be illustrated and explained in more detail in the following experimental part, which is not intended to limit the scope of this disclosure anyway.

Examples

***Effects of different proportions of NPN-mixture comprising biuret, urea and nitrates on in vitro ruminal fermentation and methane production***

***Animal adaptation***

Two ruminally cannulated Angus crossbred steers (808.8 $\pm$ 36.3 kg body weight) were used as ruminal fluid donors for the in vitro batch culture incubations. The steers were fed a corn silage and gin trash diet (70% and 30% on a dry matter basis, respectively) ad libitum at least 35 days before collecting ruminal fluid to perform the in vitro incubations. Each steer received a NPN-mixture equivalent to 100 g of urea per day comprised of an equal amount of N from the different NPN sources to adapt the rumen microbial community. Thus, each steer was fed daily 33 g of urea (Rumisan®, 46 wt.% N, Yara International ASA), 37 g of a urea-biuret mixture comprising 41 wt.% N (Yara International ASA) and 97 g of calcium nitrate (CN) (Bolifor® CNF, 15,5 wt.% N, Yara International ASA). These amounts were mixed in with the feed diet every two days. The nitrate source (Bolifor® CNF) was gradually introduced to the feed diet as follows: 29 g/ animal / day during the first week, 58 g / animal / day during the second week, and 97 g / animal / day from the third week until the end of the experiment.

***Feed preparation and chemical analysis***

The feed was prepared by drying corn silage and gin trash for 45 hours at 55°C and ground to pass a 2 mm screen in a Wiley mill.

*Experimental design and treatments*

The in vitro batch culture incubations were conducted as a randomized complete block design using 70 wt.% corn silage and 30 wt.% gin trash on a dry matter basis conserving the diet characteristics used during the animal adaptation period. The treatments were designed to be isonitrogenous (= having the same amount of dietary nitrogen) and equivalent to 1 wt.% of urea inclusion. The treatments were consequently as follows:

- control without NPN-supplementation (1);
- 100 wt.% urea (Rumisan®) (2);
- four different proportions of a mixture of urea and biuret and nitrates (Bolifor CNF) = UBN (3), i.e. 100:0 (UBN 0), 75:25 (UBN 1), 50:50 (UBN 2), 25:75 (UBN 3).

**Rumen fluid collection and in vitro incubations**

The in vitro incubations were conducted on three separate days (replicates). A representative sample of digesta was collected from different places in the rumen of ruminally cannulated steers and strained through 4 layers of cheesecloth, placed in prewarmed thermos containers, and transported to the laboratory within 30 minutes after the collection. In the laboratory, the ruminal fluid from the two steers was maintained under constant $CO_2$-flux and was combined in equal proportions. This combined ruminal fluid was mixed with McDougall's buffer (McDougall, 1948) with and without 0.077 g/liter of 10 wt.% ammonium sulfate enriched with $^{15}$N in relation 1:4, and it was used as an inoculum. Two bottles of 500 ml fitted with a side arm and a rubber septum were incubated per treatment. The bottles contained 5.6 g of substrate dry matter and 400 ml of $^{15}$N enriched inoculum, and were incubated for 24 hours at 39°C with an agitation of 60 rpm to monitor gas production kinetics using an Ankom Gas Monitoring System from Ankom Technologies, Fairport, New York. Also, one 500-ml bottle without $^{15}$N enriched inoculum was incubated to determine the basal $^{15}$N enrichment. At 12 hours of incubation, two samples of 10 ml of rumen fluid were collected from each bottle through the septa port using a 20-ml syringe. These samples were acidified by adding 10 $\mu$l of a 20 vol/vol% of $H_2SO_4$-solution to each 10-ml sample, and frozen at minus 20°C until further analysis. At the end of the 24 hours incubation, the final pH was recorded, the bottles were placed on ice to prevent further microbial fermentation and two 10-ml samples were collected and acidified by adding 20 $\mu$l of a 20 vol/vol% of $H_2SO_4$-solution and were frozen at minus 20°C until further analysis. The remaining fermentation content was thereafter agitated at 60 rpm for 30 seconds and divided into two subsamples. From the first subsample, composed of whole contents, a volume of 180 ml was frozen at minus 20°C until further analysis and from the second subsample 180 ml were used to recover the microbial pellet. Furthermore, two tubes of 100 ml per treatment containing 0.7 g of the substrate on a dry matter basis and 50 ml of inoculum without $^{15}$N enrichment and two blanks were incubated for 24 hours at 39 °C with agitation at a speed of 60 rpm. After the 24 hours incubation with ruminal fluid, 6 ml of HCl and 2 ml of a 5% pepsin solution were added. The tubes were incubated for another 48 hours at 39°C. After the incubation period, the tubes were maintained on ice and later stored for further analysis.

**Concentration of volatile fatty acids (VFA)**

VFA produced by microbial fermentation in the rumen are the main source of energy absorbed by the digestive tract of ruminants. The amount and the profile of VFA in the rumen has consequences for the efficiency of energy utilization, production of methane, risks of ruminal acidosis (characterized by a decrease in pH caused by an accumulation of organic acids in the rumen and a shift in the delicate balance of rumen microorganisms) and the supplement of animal products. A water-based solution using ethyl acetate extraction was used to determine VFA concentrations at 12 and 24 hours. Samples were centrifuged at 10,000 $\times$ g for 15 min at 4°C, 2 ml of the supernatant were mixed with 0.4 ml (5:1 ratio) of a metaphosphoric-crotonic acid solution, and samples were frozen overnight. Samples were then thawed and centrifuged again at 10,000 $\times$ g for 15 min at 4°C. The supernatant was transferred into 12 $\times$ 75 mm borosilicate disposable culture tubes (Fisherbrand; Thermo Fisher Scientific Inc., Waltham, MA) and mixed with ethyl acetate to form a 2:1 ethyl acetate : supernatant mixture. The samples were analyzed with a gas chromatograph (Agilent 7820A GC, Agilent Technologies) using a flame ionization detector and a capillary column (CP-WAX 58 FFAP 25 m $\times$ 0.53 mm, Varian CP7767; Varian Inc.).

**Microbial protein synthesis**

The rumen microbial ecosystem is made up mainly by species of bacteria, fungi, and protozoa. The microbes ferment ingested feeds by the ruminant, and, by fermentation, produce end products that are utilized by the ruminant as well as by the microbes themselves for their own proliferation and growth. The species diversity and their relative proportions within the microbial community depend primarily on the diet consumed by the animal. It is thus important that a healthy mixture of different feedstuffs is fed to the animal to keep the rumen and its microflora functioning efficiently. The speed of digestion of the feed depends on the quality and the supplement of the feed and is affected by the number and type of microbes, the pH in the rumen, the nutrients limiting the growth of the microbes and the removal of microbes from the rumen. Energy and protein are the major nutrients that limit the microbial growth, and therefore, the rumen fermentation. The microbial population needs energy and protein for their growth and multiplication. Protein, when digested, is broken down into peptides, which are short chains of amino acids. Further digestion of peptides results in individual amino acids and eventually ammonia. Rumen microbes are the major source of protein in the ruminal diet. If there is enough energy available, the rumen microbes break down the rumen degradable protein to amino acids and then to ammonia which is a major N-source for microbial growth. The microbes also convert NPN to ammonia, which contributes to the ammonia pool available for microbial growth. Microbial protein is continuously flushed from the rumen into the intestine where undergoes enzymatic digestion. The amino acids produced from the digested microbial protein are absorbed through the small intestine. The amount of microbial protein flowing into the intestines therefore largely depends on the availability of fermentable energy and N in the diet consumed by ruminants.

The total nitrogen (N) and the isotopic supplement were measured in the whole content and the bacterial pellet by an isotopic ratio mass spectrometry using a Vario Micro cube from Elementar Analyzer System GmbH. The bacteria pellet subsample was slowly centrifuged at $1,000 \times$ g for 10 minutes at 4°C. The resulting supernatant was fast centrifuged at $20,000 \times$ g for 20 minutes at 4°C to obtain the pellet of bacteria. This bacteria pellet was then washed with a 0.9% saline solution and centrifuged at $20,000 \times$ g for 20 minutes at 4°C, discarding the supernatant. The saline wash procedure was repeated twice. Finally, the bacterial pellet was freeze-dried. Separately, the 180-ml whole content subsample was completely freeze-dried. The dried samples of the whole content and of the bacterial pellet were manually grinded and weighted into an $8 \times 5$-mm pressed standard-weight tin capsule using a Mettler-Toledo Excellence Plus XP Micro Balance from Mettler-Toledo GmbH, Laboratory and Weighing Technologies. Then, 35 $\mu$l of a 10 g/l solution of $K_2CO_3$ were added to each sample and dried overnight in a forced-air oven at 60°C for complete $NH_3$-N evaporation. The percentage of atom $^{15}$N in the dried samples was analyzed in an isotope ratio mass spectrometer (IsoPrime 100 from IsoPrime) and expressed as the fractional abundance of isotopic fractions ($^{15}$N / $^{14}$N) multiplied by 10.

### Concentration of ammonia-N

Ruminal ammonia production largely reflects the amount of degradable protein in the rumen. Ruminal ammonia nitrogen (ammonia-N) is a critical nutrient for supporting microbial growth and fermentation. Ensuring the availability of ammonia-N in the rumen both on a quantitative and timely manner is fundamental for achieving maximum rate of fermentation and feed digestibility.

The concentration of ammonia-N at 12 and 24 hours in the incubation fluid was measured after centrifuging at $10,000 \times$ g for 15 minutes at 4°C using an Avanti J-E centrifuge from Beckman Coulter® Incorporated. One ml of phenol reagent was pipetted into $12 \times 75$ mm borosilicate disposable culture tubes (Fisherbrand; Thermo Fisher Scientific Inc., Waltham, MA). A 20-$\mu$l aliquot of the supernatant from the centrifuged sample was transferred to the phenol-containing culture tubes. After vortexing, 0.8 ml of hypochlorite solution was added to the mixture and was vortexed again. The culture tubes were covered with glass marbles and placed in a water bath at 95°C for 5 minutes. The absorbance was read in 96-well, flat-bottom plates at a wavelength of 665 nm using a DU-500 plate reader from Beckman Coulter® Inc. The fermentation residue reserved into the tubes of 100 ml were filtered, dried at 105°C in a forced air oven for 24 hours and ashed at 550°C for 6 hours to determine the undigested organic matter.

### Nutrient disappearance

Digestibility represents the proportion of ingested nutrients consumed that are absorbed by the animal. Dry matter is defined as the loss of weight of samples when dried in an oven above 100°C during 12 - 24 hours, whereas organic matter defines the weight loss of the dry matter when combusted (the dry matter minus the ash content). Dry matter consists of all nutrients, whereas organic matter consists of all nutrients with the exception of ash. Organic matter digestibility is defined as the proportion of organic matter in the feed that is digested in the rumen or total ruminant digestive tract. Ruminal organic matter digestibility can be used to estimate energy available for fueling microbial growth and the resulting synthesis of microbial protein in the rumen.

The in vitro dry organic matter digestibility (IVDMD) and the in vitro organic matter digestibility (IVOMD) was calculated with the following formulae:

$$IVDMD\ (\%) = \frac{incubated\ dry\ matter - residual\ dry\ matter}{incubated\ dry\ matter}\ x\ 100$$

$$IVOMD\ (\%) = \frac{incubated\ organic\ matter - residual\ organic\ matter}{incubated\ organic\ matter}\ x\ 100$$

In Table 1 below, the concentration of the total VFA and the concentration of ammonia-N in: a control diet without NPN supplementation (1), a corn silage-based diet either with urea supplementation (2) or with supplementation of urea-biuret-nitrate (UBN) mixtures (3), i.e. UBN 0, UBN 1, UBN 2, UBN 3, with a ratio of urea / biuret versus nitrates of 100 : 0; 75 : 25; 50 : 50; and 25 : 75 respectively, after 12 hours of incubation is shown. In Table 2 below, the same is shown after 24 hours of incubation. In Table 2, also the pH of the fluid, the in vitro dry matter degradability (IVDMD)(4) and the in vitro organic matter degradability (IVOMD)(5) after 24 hours of incubation are shown. The pH of the rumen has profound effects on the growth of the ruminal microbes and the digestion that takes place in this forestomach. Rumen pH can affect the extent of rumen fermentation by altering microbial populations and tissue absorptive capacity. Low ruminal pH for prolonged periods each day for instance can affect feed intake, microbial metabolism and feed digestion, and has also been related to inflammation, diarrhea and milk fat depression.

*Table 1: Effect of NPN supplementation on VFA and ammonia-N at 12 hours of incubation in a corn silage-based diet*

| Variable | Control[1] | Drea[2] | UBN mixtures[3] | | | |
|---|---|---|---|---|---|---|
| | | | UBN 0 100 : 0 | UBN 1 75 : 25 | UBN 2 50 : 50 | UBN 3 25 : 75 |
| | mM | | | | | |
| Total VFA | 30.95 | 31.77 | 32.55 | 32.92 | 32.13 | 33.53 |
| Ammonia-N | 0.35 | 2.74 | 2.61 | 2.72 | 2.31 | 2.44 |

*Table 2: Effect of NPN supplementation on VFA and ammonia-N, pH and in vitro digestibility or organic and dry matter at 24 hours of incubation in α corn silage-based diet*

| Variable | Control[1] | Urea[2] | UBN mixtures[3] | | | |
|---|---|---|---|---|---|---|
| | | | UBN 0 100 : 0 | UBN 1 75 : 25 | UBN 2 50 : 50 | UBN 3 25 : 75 |
| | mM | | | | | |
| Total VFA | 41.39 | 40.96 | 42.85 | 43.58 | 42.86 | 43.50 |
| Ammonia-N | 2.48 | 6.55 | 7.34 | 7.62 | 6.34 | 6.55 |
| pH | 6.34 | 6.38 | 6.37 | 6.36 | 6.35 | 6.39 |
| IVDMD, %[4] | 45.02 | 45.08 | 45.78 | 48.99 | 50.63 | 46.02 |
| IVOMD, %[5] | 64.13 | 65.38 | 64.17 | 65.47 | 65.66 | 65.18 |

Out of Tables 1 and 2, it can be concluded that

- With regards to the total VFA, UBN 1, 2 and 3 have a higher amount in comparison with UBN 0 and in comparison with the control without NPN supplementation or with urea supplementation. These findings indicate that UBN 1, 2, and 3 are more effective than the other NPN sources tested herein, i.e. urea and a mixture of urea and biuret (UBN 0) in supporting in vitro fermentation.
- With regards to ammonia-N, as expected, the supplementation with NPN, i.e. urea, UBN 0, 1, 2, and 3, increased its concentration. Relative to urea and UBN 0, this increase was lower for UBN 2 suggesting that this source of NPN was better in supporting microbial uptake of supplemental N, minimizing the mismatch between N release and microbial availability to use it, or both.
- With regards to IVDMD, supplementation of control with UBN sources, but not with urea, improved the extent of dry matter degradation. This effect was most pronounced for UBN 2. These findings further support the proposition that supplementation with UBN, in particular UBN 2, is more effective in supporting rumen fermentation than Urea.
- With regards to IVOMD, results further confirm that UBN 2 was the most effective source of NPN in supporting substrate fermentation by increasing OM degradation to larger extent than urea and other UBN sources.

- Overall, results demonstrate that UBN, in particular UBN 2 (urea / biuret / nitrate mixture), is an effective source of NPN that outperforms urea and a urea / biuret mixture (UBN 0) in supporting in vitro fermentation.

In Table 3, the concentration of bacterial N, bacteria efficiency: g of bacteria N / kg of OM truly digested (BE) (4) and g of bacterial N / g of incubated N $\times$ 100 (ENU) (5) in: a control diet without NPN supplementation (1), a corn silage-based diet with either urea supplementation (2) or with UBN supplementation of urea-biuret-nitrate (UBN) mixtures (3), i.e. UBN 0, UBN 1, UBN 2, UBN 3, with a ratio of urea / biuret versus nitrates of 100 : 0; 75 : 25; 50 : 50; and 25 : 75 respectively, after 24 hours of incubation is shown. These parameters define the capacity of rumen microbes to use N.

Table 3: Effect ofNPN supplementation on microbial synthesis and microbial efficiency production in a corn-based diet

| Variable | Control[1] | Urea[2] | UBN mixtures[3] | | | |
|---|---|---|---|---|---|---|
| | | | UBN 0 100 : 0 | UBN 1 75 : 25 | UBN 2 50 : 50 | UBN 3 25 : 75 |
| Bacteria N, mg | 55.66 | 67.34 | 59.55 | 62.58 | 68.70 | 64.68 |
| BE[4] | 27.07 | 34.46 | 41.98 | 35.18 | 37.39 | 36.12 |
| ENU[5] | 57.16 | 55.00 | 48.57 | 51.63 | 57.24 | 54.44 |

Out of Table 3, it can be concluded that the supplementation of the control diet with NPN increases the amount of N assimilated by bacteria. Both the concentration of bacteria N and ENU increased as the proportion of nitrates increased in UBN. This demonstrates that methane production is not reduced at the expense of reducing microbial growth and fermentation. There is consequently a positive impact, i.e. an increase, on the assimilation of bacteria N and the efficiency of the utilization of N or ENU

### Methane production

When feed is eaten by a ruminant, the nutrients are initially in the form of carbohydrates, proteins and fats (or lipids). During the fermentation of the carbohydrates, carbon dioxide and methane are produced.

The amount of methane produced was determined by measuring total gas production and the contribution of methane to it. The production of gas was recorded using an Ankom Gas Monitoring System from Ankom Technologies. This system was adapted to 500 ml bottles during the entire fermentation process. The kinetics of the production was fitted to a Gompertz model to determine the rate of the total maximal gas production (M), fractional rate of gas produced (kf) and lag phase (L). A gas subsample was analyzed to measure methane concentration and calculate the total methane production during the fermentation. The concentration of methane was determined using a gas chromatograph Agilent 7820 GC from Agilent Technologies with flame ionization and a capillary column (Plot Fused Silica 25 m $\times$ 0.32 mm, coating Molsieve 5A, Varian CP 7536 from Varian Inc.).

In Table 4, the effect of NPN supplementation on the production of methane in a corn silage-based diet is shown. More in particular, methane gas production expressed in ml/g organic matter incubated (OMi) and expressed in ml/g organic matter digested (OMd), in a control diet without NPN supplementation (1), a corn silage-based diet either with urea supplementation (2) or with UBN supplementation of urea-biuret-nitrate (UBN) mixtures (3), i.e. UBN 0, UBN 1, UBN 2, UBN 3, with a ratio of urea / biuret versus nitrates of 100 : 0; 75 : 25; 50 : 50; and 25 : 75 respectively, are shown.

Table 4: Effect of NPN supplementation on methane production in a corn silage-based diet

| Variable | Control[1] | Urea[2] | UBN mixtures[3] | | | |
|---|---|---|---|---|---|---|
| | | | UBN 0 100 : 0 | UBN 1 75 : 25 | UBN 2 50 : 50 | UBN 3 25 : 75 |
| m*M*/g OMi | 1.24 | 1.23 | 1.18 | 1.16 | 1.12 | 1.07 |
| m*M*/g OMd | 6.93 | 6.86 | 6.58 | 6.26 | 6.25 | 5.96 |

Out of Table 4, the production of methane per g of OMi or OMd decreased as the proportion of nitrates increased in UBN (amount of mM/g OMi and amount of mM/g OMd for UBN 0 > for UBN 1 > UBN 2 > UBN3). Therefore, there is a positive impact, i.e. a reduction, on the methane production from the inclusion of nitrate into UBN.

**Claims**

1.  A ruminant feed supplement composition comprising urea, biuret and one or more nitrate compounds.

2.  Ruminant feed supplement composition according to claim 1, wherein the supplement comprises between 5 and 60 wt.% of urea, between 2 and 60 wt.% of biuret and between 20 and 40 wt.% of one or more nitrate compounds.

3.  Ruminant feed supplement composition according to claim 2, wherein the supplement comprises between 20 and 40 wt.% of urea, between 20 and 40 wt.% of biuret, and between 21 and 37 wt.% of one or more nitrate compounds.

4.  Ruminant feed supplement composition according to claim 3, wherein the supplement comprises between 25 and 35 wt.% of urea, between 25 and 35 wt.% of biuret, and between 23.5 and 31.5 wt.% of one or more nitrate compounds.

5.  Ruminant feed supplement composition according to any one of claims 1 to 4, wherein the nitrate compound is a water-soluble nitrate salt.

6.  Ruminant feed supplement composition according to any one claim 5, wherein the water-soluble nitrate salt is chosen out of calcium nitrate, magnesium nitrate, ammonium nitrate, potassium nitrate and/or sodium nitrate.

7.  Ruminant feed supplement composition according to claim 5, wherein the supplement comprises between 20 and 32 wt.% of calcium nitrate and between 1 and 5 wt.% of ammonium nitrate.

8.  Ruminant feed supplement composition according to any one of the preceding claims, wherein the supplement comprises between 1 and 5 wt.% of triuret.

9.  Ruminant feed supplement composition according to any one of the preceding claims, wherein the supplement comprises between 0,5 and 3 wt.% of ammelide.

10. Ruminant feed supplement composition according to any one of the preceding claims, wherein the supplement comprises between 3 and 30 wt.% of cyanuric acid.

11. Ruminant feed supplement composition according to any one of the preceding claims, wherein the supplement comprises between 0.1 and 4.5 wt.% moisture.

12. Use of a ruminant feed supplement composition comprising urea, biuret and a nitrate compound as a NPN-source to improve nitrogen nutrition and to reduce methane emissions.

13. Use of a ruminant feed supplement composition according to claim 12, wherein a ruminant feed supplement composition according to any one of claims 1 to 11 is used.

Europäisches
Patentamt
European
Patent Office
Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | VAN WYNGAARD J D V ET AL: "Effect of dietary nitrate on enteric methane emissions, production performance and rumen fermentation of dairy cows grazing kikuyu-dominant pasture during summer", ANIMAL FEED SCIENCE AND TECHNOLOGY, ELSEVIER, AMSTERDAM, NL, vol. 244, 13 August 2018 (2018-08-13), pages 76-87, XP085471303, ISSN: 0377-8401, DOI: 10.1016/J.ANIFEEDSCI.2018.08.005 * table 1 * * the whole document * ----- | 1,3-13 | INV. A23K20/105 A23K20/20 A23K20/24 A23K50/15 |
| X | REBELO LUCAS R ET AL: "Effect of replacing soybean meal with urea or encapsulated nitrate with or without elemental sulfur on nitrogen digestion and methane emissions in feedlot cattle", ANIMAL FEED SCIENCE AND TECHNOLOGY, ELSEVIER, AMSTERDAM, NL, vol. 257, 16 September 2019 (2019-09-16), XP085874494, ISSN: 0377-8401, DOI: 10.1016/J.ANIFEEDSCI.2019.114293 [retrieved on 2019-09-16] * table 1 * * the whole document * ----- | 1,5,6, 12,13 | TECHNICAL FIELDS SEARCHED (IPC) A23K |

-/--

The present search report has been drawn up for all claims

| Place of search | Date of completion of the search | Examiner |
|---|---|---|
| The Hague | 2 July 2022 | Rooney, Kevin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 22 15 7277

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | XIUMIN ZHANG ET AL: "Effects of urea plus nitrate pretreated rice straw and corn oil supplementation on fiber digestibility, nitrogen balance, rumen fermentation, microbiota and methane emissions in goats", JOURNAL OF ANIMAL SCIENCE AND BIOTECHNOLOGY, BIOMED CENTRAL LTD, LONDON, UK, vol. 10, no. 1, 23 January 2019 (2019-01-23), pages 1-10, XP021270875, DOI: 10.1186/S40104-019-0312-2 * table 1 * * the whole document * | 1,5,6, 12,13 | |
| X | US 3 555 784 A (MOHR RUDOLF) 19 January 1971 (1971-01-19) * column 2, paragraph 3 - paragraph 4 * | 1,2,5,6 | |
| X | LT 2 014 098 A (UAB "NAUJASIS NEVEZIS" [LT]) 25 March 2016 (2016-03-25) * claims 1,2; example 4 * | 1 | TECHNICAL FIELDS SEARCHED (IPC) |
| X | CA 839 530 A (BASF AG) 21 April 1970 (1970-04-21) * page 3 * | 1,2,5,6 | |
| A | US 3 878 304 A (MOORE WILLIAM PERCY) 15 April 1975 (1975-04-15) * the whole document * | 1-13 | |

The present search report has been drawn up for all claims

| Place of search | Date of completion of the search | Examiner |
|---|---|---|
| The Hague | 2 July 2022 | Rooney, Kevin |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

**EP 22 15 7277**

This annex lists the patent family members relating to the patent documents cited in the above-mentioned European search report.
The members are as contained in the European Patent Office EDP file on
The European Patent Office is in no way liable for these particulars which are merely given for the purpose of information.

02-07-2022

| Patent document cited in search report | | Publication date | Patent family member(s) | | Publication date |
|---|---|---|---|---|---|
| US 3555784 | A | 19-01-1971 | AT | 281850 B | 10-06-1970 |
| | | | BE | 724778 A | 02-06-1969 |
| | | | DE | 1670290 A1 | 14-01-1971 |
| | | | FR | 1600495 A | 27-07-1970 |
| | | | GB | 1240499 A | 28-07-1971 |
| | | | NL | 6817149 A | 03-06-1969 |
| | | | US | 3555784 A | 19-01-1971 |
| LT 2014098 | A | 25-03-2016 | NONE | | |
| CA 839530 | A | 21-04-1970 | NONE | | |
| US 3878304 | A | 15-04-1975 | NONE | | |

EPO FORM P0459

For more details about this annex : see Official Journal of the European Patent Office, No. 12/82

**EP 4 230 055 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017181250 A